# EUROPEAN PATENT SPECIFICATION

(11) **EP 1 472 610 B1**
(45) Date of publication and mention of the grant of the patent: **21.11.2007**
(21) Application number: 03729525.0
(22) Date of filing: 15.01.2003
(51) Int. Cl.: G06F 13/42

(54) **CONFIGURABLE SYNCHRONOUS OR ASYNCHRONOUS BUS INTERFACE**
KONFIGURIERBARE SYNCHRONE ODER ASYNCHRONE BUSSCHNITTSTELLE
INTERFACE DE BUS CONFIGURABLE SYNCHRONE OU ASYNCHRONE

(30) Priority: 17.01.2002 US 52276
(43) Date of publication of application: 03.11.2004
(73) Proprietor: NXP B.V., 5656 AG Eindhoven (NL)
(72) Inventor: PONTIUS, Timothy, A., NL-5656 AA Eindhoven (NL); JENSEN, Rune, H., NL-5656 AA Eindhoven (NL)
(74) Representative: White, Andrew Gordon
(86) International application number: PCT/IB2003/000089
(87) International publication number: WO 2003/060738

(56) References cited:
- US-A- 5 339 395
- US-A- 5 625 805
- US-B1- 6 327 175

## Description

### BACKGROUND OF THE INVENTION

### 1. Field of the Invention

This invention relates to the field of system and circuit design, and in particular, to a bus interface structure that allows for either synchronous or asynchronous bus communications.

### 2. Description of Related Art

Conventionally, one of the fundamental design choices in system design is whether system communications, and particularly communications via a system bus, are synchronous or asynchronous. A synchronous design generally provides for faster data transfer than an asynchronous design, but also introduces substantial design constraints. Clock skew and slew must be well controlled in a synchronous design, because a synchronous design assumes that each functional component in the system is operating with a common time reference. In a synchronous design, transmitting devices are configured to provide data to the bus within a specified time duration, or phase, relative to an active edge of the system clock. Similarly, receiving devices are configured to read the data from the bus after a specified phase relative to an active edge of the system clock. In the "Advanced Microcontroller Bus Architecture" (AMBA) specification for the "Advanced High-Performance Bus" (AHB), a commonly used high-performance bus for integrated circuits, "master" devices place address or data information on the bus on the rising edge of the system clock, and "slave" devices read the information from the bus on the next rising edge of the same system clock. Provided that the period of the system clock is sufficiently long, the data that is provided by the master device will be in a stable state on the bus at the time that the slave device reads the data from the bus. That is, by design, a receiving device is assured of valid data at the specified phase of the system clock, and can immediately read and process the data, without further delay. If, however, due to propagation delays or other factors, the "system clock" that is used by the transmitting device differs from the "system clock" that is used by the receiving device, the receiving device may read data from the bus while the data is in a transition state.

As is known in the art, the actual amount of difference, or skew, of a signal that is present at different locations often cannot be accurately determined until after the system design is complete. During prototype testing, the maximum skew is determined, typically by measuring the system clock at the components that are separated by the furthest distance, or separated by the largest propagation delay, then adding a safety factor to allow for worst-case operating conditions. Based on this maximum skew, the speed of the system clock is suitably adjusted to assure that these furthest separated components can reliably communicate synchronously despite this maximum skew. Because the system clock is common to all components, however, this adjustment of the system clock effectively limits all bus communications among components to this worst-case determination. Effectively, all components are treated as if they were each separated from each other by the farthest separation. In many instances, the reduction in speed of the system clock to accommodate the skew of the system clock at the furthest separated components results in unacceptable performance. In such instances, the system must be redesigned to reduce the worst-case skew, typically by rearranging the configuration of the functional components, and, if the rearrangement is not sufficient to cure the problem, by removing features or functions to reduce the size of the system, and thus reduce the maximum separation among components. As is known in the art, a common cause of a major system redesign is an inability to achieve a given system clock speed.

An asynchronous design, on the other hand, does not rely upon all components having a common system clock. Generally, the components have independent clocks, and therefore the phase or skew of each component's clock relative to each other component's clock in indeterminable. Conceptually, in an asynchronous design, the receiving device adjusts its operation to correspond to the transmitting device, and thereafter, for at least the next clock cycle, the receiving and transmitting device are "in-sync", and reliable data transfer can occur. The time required for the receiving system to achieve an in-sync relationship with the transmitter, however, reduces the effective data throughput rate, compared to a synchronous design at the same system-clock frequency. Advantageously, however, because the receiving device is configured to allow the time required to achieve an in-sync condition before effecting the data transfer, the data transfer is substantially independent of clock skew. In the general case, an asynchronous design architecture is substantially independent of the separation among components. In practice, a maximum skew limit is imposed, and thus a maximum separation is imposed, to assure acceptable performance, and to simplify the process required by the receiving system to achieve an in-sync relationship.

United States Patent 6,327,175 discloses a memory device that is configurable to be operated in an asynchronous or a synchronous mode in accordance with a value stored in a control register thereof.

United States Patent 5,339,395 discloses an interface circuit for interfacing a peripheral device and a microprocessor to enable data transference between a memory location within the peripheral device and a data bus of the microprocessor. The interface circuit is operated in either a synchronous mode or an asynchronous mode, according to the type of bus control used by the microprocessor.

### BRIEF SUMMARY OF THE INVENTION

It is an object of this invention to provide a system architecture and method that optimizes data throughput, at a system level. It is a further object of this invention to provide a system architecture that allows synchronous bus communications, without limiting all components to a worst-case clock-skew condition. It is a further object of this invention to provide a bus interface device that is configurable for synchronous or asynchronous communications.

These objects, and others, are achieved by providing a system architecture and method that allows for both synchronous and asynchronous communications on a common bus. Components that are able to reliably communicate via the bus using a synchronous interface are configured to communicate synchronously. Components that would require an unacceptable reduction in system-clock frequency to achieve synchronous communications are configured to communicate asynchronously. A bus controller facilitates bus arbitration, as well as synchronous-to-synchronous, synchronous-to-asynchronous and asynchronous-to-synchronous, and asynchronous-to-asynchronous transfers between components. To accommodate for physical layout dependencies, the components include a bus interface that is configurable for either synchronous or asynchronous communications, so that the determination of whether communications will be synchronous or asynchronous can be made after the layout is completed. The determination of whether a synchronous or asynchronous interface is used may also be dependent upon actual system performance, thereby facilitating a dynamic reconfiguration to optimize system performance.

According to an aspect of the invention, there is provided a bus controller as defined by the appended claim 1.

According to another aspect of the invention, there is provided a system comprising a bus controller, a plurality of functional blocks, and a communications bus, as defined by the appended claim 6.

According to a further aspect of the invention, there is provided a method of facilitating communications in a system, as defined by the appended claim 7.

### BRIEF DESCRIPTION OF THE DRAWINGS

The invention is explained in further detail, and by way of example, with reference to the accompanying drawings wherein:
FIG. 1 illustrates an example block diagram of a system that allows for both synchronous and asynchronous communications via a common bus, in accordance with this invention.
FIG. 2 illustrates an example block diagram of a bus interface that is configurable for either synchronous or asynchronous communications, in accordance with this invention.
FIG. 3 illustrates an example flow diagram for data transfer via a system that allows for both synchronous and asynchronous communications, in accordance with this invention.

Throughout the drawings, the same reference numerals indicate similar or corresponding features or functions.

### DETAILED DESCRIPTION OF THE INVENTION

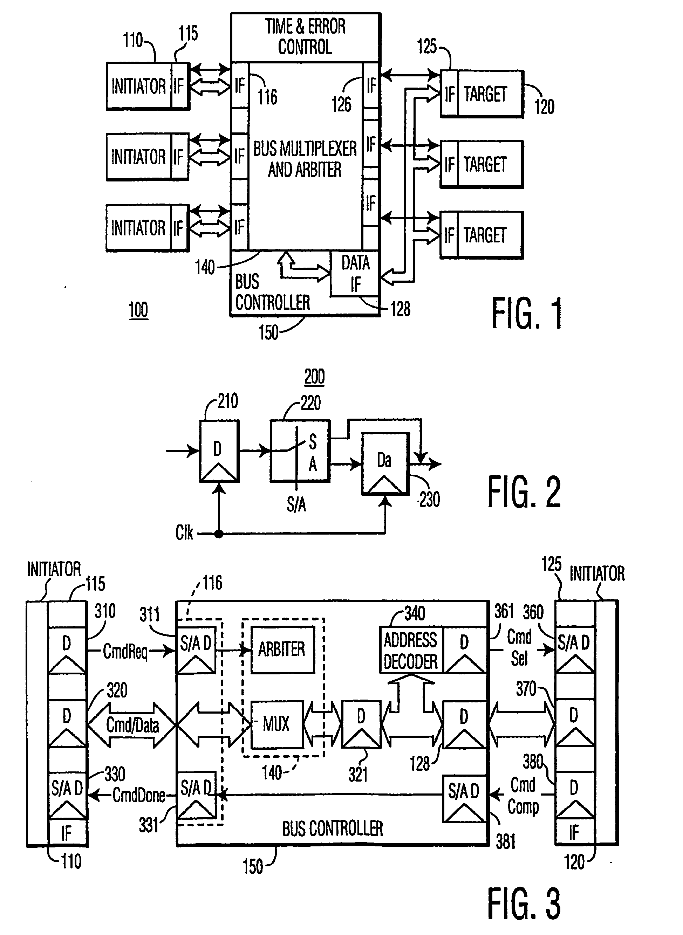

FIG. 1 illustrates an example block diagram of a system 100 that allows for both synchronous and asynchronous communications via a common bus structure, in accordance with this invention. The system 100 includes a plurality of functional components that communicate with each other via the bus structure. For ease of understanding, the invention is presented using the paradigm of an initiator 110 of a bus transaction, and a target 120 of the communications with the initiator 110. A functional component may be an initiator 110 or a target 120, or may be both an initiator 110 and a target 120. A memory component, for example, is typically only a target 120, because a memory component does not generally initiate data transfers. A CPU in a single processor system, on the other hand is typically an initiator 110, because it generally determines what communications will take place. If, however, the CPU allows interrupts via the bus structure, it will be a target 120 for the initiator of the interrupt. Note that, using this paradigm, the role as initiator 110 and target 120 is independent of the desired direction (read/write, transmit/receive) of data transfer.

Also for ease of understanding, the invention is presented using a centralized bus controller 150 that manages bus activities, including bus multiplexing and arbitration, timeout and error control, and so on. As will be evident to one of ordinary skill in the art, the principles of this invention are applicable to bus structures with distributed bus control, wherein, for example, the arbitration and multiplexing functions are achieved by having each component cooperate to minimize bus contention.

Bus architectures include both "broadcast" buses and "directed" buses. In a broadcast bus, multiple components are commonly connected directly to the bus, so that the data that is presented to the bus is available to each of the components. In a directed bus, the interface to the bus is via a multiplexer that selects which devices are connected to the bus at a given point in time. The example system 100 of FIG. 1 illustrates a bus structure that includes a directed bus for communications with the initiators 110, and a broadcast bus for bus communications with the targets 120, to illustrate that the principles of this invention are applicable to directed buses, broadcast buses, or a combination of each.

Each of the components 110, 120 of the system 100 includes an interface adapter 115, 125, respectively, for communicating via the bus. The communications via the bus include data, which is indicated by the wide arrow symbols, and control signals, which are indicated by single width arrow symbols. In the directed bus structure of the initiators 110, each interface adapter 115 has a corresponding interface module 116 at the bus controller 150. Both data and control signals are communicated between the interfaces 115, 116. In the broadcast bus structure of the targets 120, each interface adapter 125 has a corresponding control interface module 126 for the control signals, but a data interface module 128 provides a common interface for data communications with all of the targets 120.

In accordance with a first aspect of this invention, at least one of the component interface adapters 115, 125 can be configured to provide either synchronous or asynchronous communications. Preferably, each of the component interface adapters 115, 125 are configurable, to allow for maximum design flexibility, but some components, such as select memory devices, may be constrained to provide only synchronous communications, to assure a particular performance level.

In a typical embodiment of this invention, the functional components 110, 120 forming the system, and, if provided, the bus controller 150, will be laid out to form the physical structure of the system 100, and components 110, 120 that cannot reliably communicate using synchronous communications, at the preferred system clock speed, are configured to use asynchronous communications. That is, if the clock skew at a particular component 110, 120 prevents reliable synchronous communications, the particular component 110, 120 is configured with inherently reliable asynchronous communications, albeit at a reduced performance level, rather than reducing the performance of all the components 110, 120, as would be required in a conventional synchronous bus design. In a preferred layout of the functional components 110, 120, frequently accessed components 110, 120 will generally be placed at the core of the physical structure, with less frequently accessed components 110, 120 being placed farther from the core area. In this manner, the components 110, 120 that are more likely to remain in the high-performance synchronous communications mode are those that are most frequently accessed, thereby optimizing the overall system performance.

FIG. 2 illustrates an example block diagram of a bus interface 200 that is configurable for either synchronous or asynchronous communications, in accordance with this invention. The bus interface 200 includes a register 210, a delay element 230, and a switch 220 that determines whether the delay element 230 is bypassed. In a preferred embodiment, the delay element 230 is a clocked element that uses the same clock as the register 210, for ease of implementation, although other means, common in the art, of introducing a delay to a signal may be used. An explicit switch 220 is illustrated in FIG. 2, although the inclusion or bypassing of the delay element 230 in the signal path between the input and output of the interface 200 may be effected by a "hard-wired" connection or exclusion of the delay element 230 in the data path, as discussed further below. The use of this bus interface 200 to provide either synchronous or asynchronous communications is discussed below with regard to the flow diagram of FIG. 3.

FIG. 3 illustrates an example flow diagram for data transfer via a system that allows for both synchronous and asynchronous communications. The flow diagram illustrates a configuration of the system 100 of FIG. 1 during communications between an initiator 110 and a target 120. The example structure illustrated in FIG. 3 is presented for illustration purposes, and is intended to represent a fairly conventional control and data flow process, or protocol, wherein an initiator 110 initiates a communication by asserting a command-request control signal and the addressed target 120 acknowledges an execution of the command by asserting a command-complete control signal. Other communications protocols are common in the art, and the application of the principles of this invention to these other protocols will be evident to one of ordinary skill in the art in view of this disclosure.

Each of the initiator and target interface adapters 115 and 116 include a command-request interface 310, 360, respectively, an address/data interface 320, 370, respectively, and a command-complete interface 330, 380, respectively. In this example, the interfaces 330 and 360 are illustrated as configurable bus interfaces, corresponding to the example interface 200 of FIG. 2. The bus controller 150 contains corresponding interface modules 311, 331, 361, and 381, of which modules 311 and 381 are illustrated as configurable bus interfaces. The configuration of the configurable bus interfaces 311, 330, 360, 381 to achieve asynchronous or synchronous bus communications is detailed below.

### SYNCHRONOUS-SYNCHRONOUS COMMUNICATIONS

If both the initiator 110 and target 120 of FIG. 3 are configured in the synchronous mode, each of the configurable bus interfaces 311, 330, 360, 381 in FIG. 3 are configured to bypass its internal delay element (230 in FIG. 2). That is, in this configuration, each of the interfaces 311, 330, 360, 381 logically comprises merely a register (210 in FIG. 2), and the communications occur using a conventional synchronous register-to-register transfer at each clock cycle. In this configuration, the initiator 110 simultaneously transmits a command-request control signal and a command to the bus controller 150, via the interfaces 310, 320, respectively. The bus arbiter and multiplexer 140 receives this information and allocates the bus to the initiator 110. At the same time, an address decoder 340 decodes a target address that is contained in the command, and asserts a command-select signal to the addressed target 120, which is received at the interface 360. The target 120 processes the command, typically a read or write data transfer command, which contains an indicated address within the target 120 for this data transfer. When the target 120 is ready to effect this command, the target 120 asserts a command-complete control signal to the bus controller 150 via the interface 380, which is subsequently communicated to the initiator 110, and received at the interface 330.

If the command is a write command, for transmitting data from the initiator 110 to the target 120, the data that is to be transmitted is presented at the interface 320 at the same time that the write command-request signal is asserted by the interface 310. The target 120 then accepts the data, which is present at the data interface register 128 when the corresponding command-select control signal is received at the interface 360, and asserts the command-complete control signal via the interface 380. Upon receipt of the corresponding command-done control signal at the interface 330, the initiator 110 is free to release the bus by deasserting the command-request control signal at the interface 310, and need no longer maintain the address and data signals at the interface 320.

If the command is a read command, for receiving data from the target 120 at the initiator 110, the data that is to be transmitted is presented at the interface 370 of the target 120 at the same time that the target 120 asserts the command-complete control signal at the interface 380. When the corresponding command-done signal is received at the interface 330 of the initiator 110, the initiator 110 accepts the data via the interface 320.

Note that in the above description, a common synchronous time-base is assumed. The interfaces 310-381 are each operated in lock-step with each other, so that when, for example, the command-request signal and the command are presented at the interfaces 310, 320, the bus multiplexer and arbiter 140 is configured to multiplex the command signal for processing by the address decoder 340 on the next clock cycle. In like manner, when a write command-select signal is received at the interface 360, the corresponding data is assumed to be present at the interface 370.

### ASYNCHRONOUS-SYNCHRONOUS COMMUNICATIONS

If the clock at the initiator 110 is substantially skewed from the clock at the bus controller 150, the above described synchronous communication cannot be assured to be reliable. Consider, for example, a clock skew that is approximately equal to the clock period. In such a situation, the command-request signal at the interface 310 and the command/data at the interface 320 will be in a transition state when the interface 311 accepts input at the interface 311. If the interface 311 determines that the input is an asserted command-request signal from the interface 310, the bus arbiter and multiplexer 140 will route the command/data from the interface 320 to the address decoder 340. If, in this example, the command/data at the interface 310 is in a transition state, or if it hasn't yet changed from its prior state, the command/data that is routed to the address decoder 340 is likely to be invalid, and an improper sequence of data transfer will occur. That is, due to the clock skew, the communications from the initiator 110 will be, effectively, asynchronous with the bus controller 150, yet the bus controller 150 is configured to assume synchronous communications. As noted above, a conventional solution to this problem is to slow down the system clock. In so doing, the communications of the initiator 110 will be synchronous with the bus controller 150, because the clock skew will be relatively smaller, compared to the longer clock period of this slower system clock.

In accordance with this invention, if there is a substantial clock skew at the initiator 110, such that synchronous communications cannot be achieved, the configurable interfaces 311 and 330 are configured to purposely delay the corresponding control signals, to assure that the command/data at the interface 320 is stable when the control signal is acted upon. Referring to the configurable interface circuit of FIG. 2, when the switch 220 is configured to include the delay device 230 in the signal path between the input and output of the interface 200, the input signal will be delayed by one or more clock cycles, depending upon the number of delay elements in the delay device 230. As noted above, other means of introducing a delay to a signal are common in the art, and need not be dependent upon the system clock that is used at the register 210 to accept the input signal. The amount of delay can be configurable for each component in the system, based on a measured or calculated maximum skew. In a preferred embodiment, for ease of implementation, the delay element 230 is the same for all components, and the amount of delay is based upon a worst-case estimate of the maximum possible skew, regardless of where in the layout the component is placed. Note, however, that in contrast to the conventional scheme of reducing the system clock speed based on a worst-case delay estimate determination, the worst-case delay of this invention will only affect the components that are determined to be unable to provide reliable synchronous communications.

When the interface 311 is configured to add the worst-case delay (or a specifically determined delay for the particular initiator 110) to the command-request control signal, relative to the command/data at the interface 320, the command/data is assured to be stable when the interface 311 provides the command-request control signal to the bus multiplexer and arbiter 140. Because the command/data is assured to be stable when the command-request control signal is processed by the bus multiplexer and arbiter 140, the proper decoding of the command and target address is assured, regardless of the timing or phase relationship between the clock at the initiator 110 and the clock at the bus controller 150.

In like manner, the configuration of the interface 330 in the asynchronous mode introduces a delay to the command-done signal path from the bus controller 150. If a read operation is being performed, this delay assures that the data from the target 120 is stable at the interface 320 before the command-done signal is processed, and the data is read.

This forced delay in the command-request and command-done signal paths does introduce a delay in the effective speed of data transfer to and from the initiator 110, but it does not introduce a delay to communications of other initiators that are configured to operate in the synchronous mode.

### SYNCHRONOUS-ASYNCHRONOUS COMMUNICATIONS.

As in the case of the initiator 110, if there is a substantial clock skew at the target 120, the clock at the target 120 may cause the input to be clocked into the interface 370 while the input is in transition, or while it still corresponds to the prior command/data. Or, the asserted command-complete signal from the interface 380 may be clocked into the interface 381 while the data at the input to the data interface 128 is in transition, or otherwise unstable. If synchronous communications with the target 120 is determined to be unreliable, the configurable interfaces 360 and 381 are configured to introduce an additional delay to the control signals, relative to the command/data that is communicated via the interfaces 128, 370. The determination of the amount of delay to be introduced is performed as discussed above with regard to the initiator 110, so that the data at the input of the interfaces 128, 370 is assured to be stable when the corresponding control signal is processed by the bus controller 150 and target 120, respectively. In this manner, reliable data transfer is achieved regardless of the timing or phase relationship between the clock at the target 120 and the clock at the bus controller 150.

As in the case of an initiator 110 that is configured for asynchronous communications, the forced delay in the command-select and command-complete signal paths does introduce a delay in the effective speed of data transfer to and from the target 120, but it does not introduce a delay to communications of other initiators that are configured to operate in the synchronous mode.

Note that the configuration of the interfaces 360, 381 to the asynchronous mode is independent of the configuration of the interfaces 311, 330. That is, if the clock skew at the initiator 110 is sufficiently small to allow for synchronous communications, the initiator 110 will be configured for synchronous communications, regardless of the clock skew at the target 120, and vice versa.

### ASYNCHRONOUS-ASYNCHRONOUS COMMUNICATIONS

If both the initiator 110 and the target 120 cannot provide reliable synchronous communications, each of the configurable interfaces 311, 330, 360, and 381 are configured for asynchronous communications by adding a delay to the control signal paths, relative to the command/data signal paths. The data flow with this configuration is as detailed above with regard to each of the initiator 110 and target 120 asynchronous communications.

Any of a variety of techniques may be used to effect the desired configuration of the configurable interfaces of this invention. In a straightforward embodiment of the system 100 of FIG. 1 in an integrated circuit, the configurable interfaces are included with each interface adapter 115,125 and each interface module 116, 126 of the components 110, 120, 150 of FIG. 1. When the system is laid out, the clock skew of each component is determined, using for example actual measurements after fabrication, layout-dependent simulations, or layout-dependent calculations or estimations. In a preferred embodiment of this invention, the "switch" 220 of FIG. 2 is implemented by a configuration of interconnections at an upper layer of the integrated circuit, preferably as a short between the input and output of the delay element 230. If the interface 200 is to be configured for asynchronous communications, the short is removed; otherwise, the short acts to bypass the delay element 230 when it is configured for synchronous communications.

In a more complex embodiment, the switch 220 may be a conventional switch as illustrated in FIG. 2 that includes a control input S/A. In such a configuration, the configuration of each configurable interface in the system 100 of FIG. 1 may be determined by the bits of a programmable register. After the system is laid out, the clock skews are determined, and the register is suitably programmed to effect the desired configuration of synchronous and asynchronous interfaces.

A dynamic configuration may also be provided, wherein, for example, the bus controller 150 is configured to test synchronous communications with each initiator 110 and target 120. If the bus controller 150 determines that synchronous communication with a particular initiator 110 or target 120 is unreliable, the bus controller 150 reconfigures the corresponding interfaces 311 and 330, or 360 and 381, for asynchronous communications with the particular initiator 110 or target 120, respectively. This dynamic configuration is performed when the system is initialized, and optionally may be performed at other times, to optimize performance under different environmental conditions. These optional dynamic configurations may be performed periodically, on demand, or when triggered by a change of conditions within the system. Note that this dynamic configuration capability is particularly well suited for large systems, such as systems with removable components, or peripherals. As each peripheral is added to the system, the bus controller 150 dynamically determines whether higher-performance synchronous communications can be provided, or whether slower-performance asynchronous communications are required.

The foregoing merely illustrates the principles of the invention. It will thus be appreciated that those skilled in the art will be able to devise various arrangements which, although not explicitly described or shown herein, embody the principles of the invention and are within the scope of the following claims.

## Claims

1. A bus controller (150) comprising
a plurality of bus interface modules (116, 126) for facilitating communications among a plurality of functional blocks (110, 120) via a communications bus,
wherein
at least one bus interface module of the plurality of bus interface modules (116, 126) is configured to selectively provide either synchronous or asynchronous communications via the communications bus, and **characterized in that** the selection is based on the clock skew between the bus controller and one of the functional blocks.

2. The bus controller (150) of claim 1, further including
at least one delay device (230) for delaying control signals that are communicated among the plurality of functional blocks (110, 120) via the communications bus, and wherein the at least one delay device (230) is configured to be bypassed during synchronous communications, and used for delaying control signals during asynchronous communications.

3. The bus controller (150) of claims 1 or 2, wherein
the bus controller (150) is able to facilitate communication of data between a first functional block and a second functional block of the plurality of functional blocks (110, 120) via asynchronous communication with the first functional block and synchronous communication with the second functional block.

4. The bus controller (150) of claims 1, 2, or 3, wherein
the bus controller (150) is configured to:
determine if communications with at least one functional block of the plurality of function blocks can be effected via synchronous communications, and
selectively provide asynchronous communications to the at least one functional block if communications with the at least one functional block cannot be effected via synchronous communications.

5. The bus controller (150) of any of claims 1 to 4, wherein the bus controller is embodied in an integrated circuit that includes a plurality of conductive layers, and wherein the selection is implemented by a configuration of interconnections at an upper layer of the integrated circuit.

6. A system (100) comprising the bus controller (150), the plurality of functional blocks (110, 120), and the communications bus of any of claims 1 to 5.

7. A method of facilitating communications in a system (100) that comprises a plurality of functional blocks (110, 120) that communicate via a bus structure, comprising:
creating a layout of the plurality of functional blocks (110, 120), and **characterized in that** the method further comprises:
determining a clock skew associated with at least one functional block of the plurality of functional blocks (110, 120), based on the layout, and
selectively configuring the at least one functional block for either asynchronous or synchronous communications via the bus structure, based on the clock skew.

8. The method of claim 7, wherein
the system (100) is embodied in an integrated circuit having a plurality of layers, and
selectively configuring the at least one functional block includes determining a configuration of interconnections at an upper layer of the plurality of layers to provide either asynchronous or synchronous communications with the bus structure.

9. The method of claims 7 or 8, wherein
selectively configuring the at least one functional block includes configuring the at least one functional block to provide a delay to control signals that are communicated between the at least one functional block and the bus structure.

## Patentansprüche

1. Bus-Controller (150), umfassend
eine Vielzahl von Bus-Schnittstellenmodulen (116, 126) zum Ermöglichen von Kommunikationsvorgängen zwischen einer Vielzahl von Funktionsblöcken (110, 120) über einen Kommunikationsbus, wobei
mindestens ein Bus-Schnittstellenmodul der Vielzahl von Bus-Schnittstellenmodulen (116, 126) ausgebildet ist, selektiv entweder synchrone oder asynchrone Kommunikationsvorgänge über den Kommunikationsbus bereitzustellen, **dadurch gekennzeichnet, dass** die Selektion auf dem Taktversatz zwischen dem Bus-Controller und einem der Funktionsblöcke basiert.

2. Bus-Controller (150) nach Anspruch 1, weiter beinhaltend
wenigstens eine Verzögerungsvorrichtung (230) zum Verzögern von Steuersignalen, die zwischen der Vielzahl von Funktionsblöcken (110, 120) über den Kommunikationsbus kommuniziert werden, wobei die mindestens eine Verzögerungsvorrichtung (230) ausgebildet ist, während synchroner Kommunikationsvorgänge überbrückt zu werden und während asynchroner Kommunikationsvorgänge zum Verzögern von Steuersignalen verwendet zu werden.

3. Bus-Controller (150) nach Anspruch 1 oder 2, bei dem der Bus-Controller (150) in der Lage ist, eine Datenkommunikation zwischen einem ersten Funktionsblock und einem zweiten Funktionsblock der Vielzahl von Funktionsblöcken (110, 120) über eine asynchrone Kommunikation mit dem ersten Funktionsblock und eine synchrone Kommunikation mit dem zweiten Funktionsblock zu ermöglichen.

4. Bus-Controller (150) nach Anspruch 1, 2 oder 3, bei dem der Bus-Controller (150) ausgebildet ist:
zu bestimmen, ob Kommunikationsvorgänge mit mindestens einem Funktionsblock der Vielzahl von Funktionsblöcken über synchrone Kommunikationsvorgänge bewirkt werden können, und
dem mindestens einen Funktionsblock selektiv asynchrone Kommunikationsvorgänge bereitzustellen, wenn Kommunikationsvorgänge mit dem mindestens einen Funktionsblock nicht über synchrone Kommunikationsvorgänge bewirkt werden können.

5. Bus-Controller (150) nach einem der Ansprüche 1 bis 4, bei der Bus-Controller in einem integrierten Schaltkreis ausgeführt ist, der eine Vielzahl leitfähiger Schichten enthält und bei dem die Selektion durch eine Konfiguration von Verbindungen auf einer oberen Schicht des integrierten Schaltkreises implementiert ist.

6. System (100) umfassend den Bus-Controller (150), die Vielzahl von Funktionsblöcken (110, 120) und den Kommunikationsbus nach einem der Ansprüche 1 bis 5.

7. Verfahren zum Ermöglichen von Kommunikationsvorgängen in einem System (100), welches eine Vielzahl von Funktionsblöcken (110, 120) umfasst, die über eine Busstruktur kommunizieren, umfassend:
Erzeugen eines Layouts der Vielzahl von Funktionsblöcken (110, 120), **dadurch gekennzeichnet, dass** das Verfahren weiterhin umfasst:
Bestimmen eines Taktversatzes, der mit mindestens einem Funktionsblock der Vielzahl von Funktionsblöcken (110, 120) verbunden ist, auf der Basis des Layouts, und
selektives Konfigurieren des mindestens einen Funktionsblocks für entweder asynchrone oder synchrone Kommunikationsvorgänge über die Busstruktur, auf der Basis des Taktversatzes.

8. Verfahren nach Anspruch 7, bei dem das System (100) in einem integrierten Schaltkreis mit einer Vielzahl von Schichten ausgeführt wird, und
das selektive Konfigurieren des mindestens einen Funktionsblocks ein Bestimmen einer Konfiguration von Verbindungen auf einer oberen Schicht der Vielzahl von Schichten beinhaltet, um entweder asynchrone oder synchrone Kommunikationsvorgänge mit der Busstruktur bereitzustellen.

9. Verfahren nach Anspruch 7 oder 8, bei dem das selektive Konfigurieren des mindestens einen Funktionsblocks ein Konfigurieren des mindestens einen Funktionsblocks beinhaltet, um eine Verzögerung von Steuersignalen bereitzustellen, die zwischen dem mindestens einen Funktionsblock und der Busstruktur kommuniziert werden.

## Revendications

1. Régisseur de bus (150) comprenant :
- une pluralité de modules d'interface de bus (116, 126) pour faciliter les communications entre une pluralité de blocs fonctionnels (110, 120) par l'intermédiaire d'un bus de communications,
dans laquelle
- au moins un module d'interface de bus de la pluralité de modules d'interface de bus (116, 126) est configuré pour fournir sélectivement des communications synchrones ou asynchrones par l'intermédiaire du bus de communications, et **caractérisé en ce que** la sélection est basée sur le décalage des impulsions d'horloge entre le régisseur de bus et un des blocs fonctionnels.

2. Régisseur de bus (150) selon la revendication 1, comprenant en outre :
- au moins un circuit à retard (230) pour retarder les signaux de commande qui sont diffusés entre la pluralité de blocs fonctionnels (110, 120) par l'intermédiaire du bus de communications, et dans lequel le au moins un circuit à retard (230) est configuré pour être court-circuité pendant les communications synchrones, et utilisé pour retarder les signaux de commande pendant les communications asynchrones.

3. Régisseur de bus (150) selon la revendication 1 ou 2, dans lequel
- le régisseur de bus (150) peut faciliter la communication de données entre un premier bloc fonctionnel et un deuxième bloc fonctionnel de la pluralité de blocs fonctionnels (110, 120) par l'intermédiaire d'une communication asynchrone avec le premier bloc fonctionnel et d'une communication synchrone avec le deuxième bloc fonctionnel.

4. Régisseur de bus (150) selon la revendication 1, 2, ou 3, dans lequel
le régisseur de bus (150) est configuré pour :
- déterminer si les communications avec au moins un bloc fonctionnel de la pluralité de blocs fonctionnels peuvent être effectuées par l'intermédiaire de communications synchrones, et
- appliquer sélectivement des communications asynchrones à au moins un bloc fonctionnel si les communications avec le au moins un bloc fonctionnel ne peuvent pas être effectuées par l'intermédiaire de communications synchrones.

5. Régisseur de bus (150) selon l'une quelconque des revendications 1 à 4, dans lequel le régisseur de bus est réalisé dans un circuit intégré qui comprend une pluralité de couches conductrices, et dans lequel la sélection est mise en oeuvre par une configuration d'interconnexions au niveau d'une couche supérieure du circuit intégré.

6. Système (100) comprenant le régisseur de bus (150), la pluralité de blocs fonctionnels (110, 120) et le bus de communications selon l'une quelconque des revendications 1 à 5.

7. Procédé pour faciliter les communications dans un système (100) qui comprend une pluralité de blocs fonctionnels (110, 120) qui communiquent par l'intermédiaire d'une structure de bus, comprenant les étapes consistant à :
- créer une disposition de la pluralité de blocs fonctionnels (110, 120),
et **caractérisé en ce que** le procédé comprend en outre les étapes consistant à :
- déterminer un décalage des impulsions d'horloge associé à au moins un bloc fonctionnel de la pluralité de blocs fonctionnels (110, 120), reposant sur la disposition, et
- configurer sélectivement le au moins un bloc fonctionnel pour des communications asynchrones ou synchrones par l'intermédiaire de la structure de bus, reposant sur le décalage des impulsions d'horloge.

8. Procédé selon la revendication 7, dans lequel
- le système (100) est illustré dans un circuit intégré ayant une pluralité de couches, et
- la configuration sélective du au moins un bloc fonctionnel comprend la détermination d'une configuration d'interconnexions au niveau d'une couche supérieure de la pluralité de couches pour fournir des communications asynchrones ou synchrones avec la structure de bus.

9. Procédé selon la revendication 7 ou 8, dans lequel
- la configuration sélective du au moins un bloc fonctionnel comprend la configuration du au moins un bloc fonctionnel pour appliquer un retard aux signaux de commande qui communiquent entre le au moins un bloc fonctionnel et la structure de bus.
